# EUROPÄISCHE PATENTANMELDUNG

(11) **EP 1 016 585 A2**
(43) Veröffentlichungstag der Anmeldung: **05.07.2000**
(21) Anmeldenummer: 99124066.4
(22) Anmeldetag: 10.12.1999
(51) Int. Cl.: B62D 65/00, B65G 17/34

(54) **Plattenband für die Montage oder den Transport eines Kraftfahrzeugs**

(30) Priorität: 21.12.1998 DE 19858989
(71) Anmelder: Volkswagen Aktiengesellschaft, 38436 Wolfsburg (DE)
(72) Erfinder: Schweiger, Alfred, 38448 Wolfsburg (DE); Bisanz, Bernd, 38446 Wolfsburg (DE); Ulrich, Werner, 38448 Wolfsburg (DE)

(57) **Zusammenfassung**

Die Erfindung betrifft ein Montage- und/oder Transportband (1) für die Montage oder den Transport eines Kraftfahrzeuges (2), wobei mehrere einzelne Tragelemente (3) vorgesehen sind, jedes Tragelement (3) bewegbar gelagert und zur Aufnahme eines Kraftfahrzeuges (2) ausgebildet ist.

Die Sicherheit ist dadurch erhöht und der Montageaufwand dadurch verringert, daß die Tragelemente (3) derartig ausgebildet und hintereinander angeordnet sind, daß das Band (1) als ein Endlosband ausgeführt ist.

## Beschreibung

Die Erfindung betrifft ein Montage- und/oder Transportband für die Montage oder den Transport eines Kraftfahrzeugs, wobei mehrere einzelne Tragelemente vorgesehen sind, jedes Tragelement beweglich gelagert und zur Aufnahme eines Kraftfahrzeugs ausgebildet ist.

Im Stand der Technik sind verschiedenartig ausgebildete Montage- und/oder Transportbänder für die Montage oder den Transport von Kraftfahrzeugen bekannt. Einerseits gibt es geradlinig verlaufende Fertigungsstraßen, auf denen die Kraftfahrzeuge von Bearbeitungsstation zu Bearbeitungsstation entsprechend weiter verschoben werden und an den jeweiligen einzelnen Bearbeitungsstationen entsprechend bearbeitet, montiert bzw. teilweise zusammengebaut werden. Andererseits sind Fertigungsstraßen, d.h. Montage- und/oder 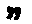 Transportbänder" bekannt, die entsprechend dimensionierte plattenförmige Tragelemente aufweisen, wobei jeweils auf einem plattenförmigen Tragelement ein Kraftfahrzeug steht und die plattenförmigen Tragelemente innerhalb einer 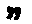 Straße", vzw. einer Bodenausnehmung, bewegbar gelagert sind. Hierbei sind auch Fertigungsstraßen bekannt, die nicht ausschließlich geradlinig verlaufen, sondern teilweise quer verlaufende Abzweigungen aufweisen. Hierbei wird das plattenförmige Tragelement dann zunächst in einer ersten bestimmten geradlinigen Richtung verschoben, wobei das plattenförmige Tragelement bei Erreichen der Abzweigung dann in einer im wesentlichen rechtwinklig zur ersten Richtung verlaufenden zweiten Richtung entsprechend verschoben wird, beispielsweise, damit das auf dem plattenförmigen Tragelement transportierte Kraftfahrzeug zu einer weiteren, in der Abzweigung liegenden Bearbeitungsstation transportiert werden kann.

Bei der oben zuletzt erläuterten Fertigungsstraße ist unter anderem von Nachteil, daß die plattenförmig ausgebildeten Tragelemente bei ihrer Bewegung von einer Bearbeitungsstation zur nächsten Bearbeitungsstation nicht immer direkt aneinander grenzen, sondern teilweise zwischen den einzelnen plattenförmigen Tragelementen eine entsprechende Lücke auftritt, also kein lückenloser Übergang zwischen den direkt nacheinander angeordneten Tragelementen gewährleistet ist. Insbesondere bei einer Verschiebung des Tragelementes von einer ersten Richtung in eine zweite, im wesentlichen zur ersten Richtung rechtwinklig verlaufende Richtung entsteht innerhalb der Fertigungsstraße eine entsprechend große Lücke. Abgesehen davon, daß hier aufwendige Sicherheitsmaßnahmen durchgeführt werden müssen, um zu vermeiden, daß beispielsweise Personen in derartige Lücken bzw. dann in die offene Bodenausnehmung fallen, müssen die Monteure, wenn sie von einem ersten zu einem zweiten Tragelement laufen wollen, teilweise entsprechend große Umwege zur Umgehung dieser Lücken in Kauf nehmen, was den zeitlichen Montageaufwand wesentlich erhöht.

Der Erfindung liegt daher die Aufgabe zugrunde, das Montage- und/oder Transportband der eingangs genannten Art derart auszugestalten und weiterzubilden, daß der Montageaufwand bzw. Arbeitsaufwand wesentlich verringert und die Sicherheit für die Monteure erhöht ist.

Die zuvor aufgezeigte Aufgabe ist nun dadurch gelöst, daß die Tragelemente derartig ausgebildet und hintereinander angeordnet sind, daß das Band als ein Endlosband ausgeführt ist. Durch die Ausbildung des Montage- und/oder Transportbandes, im folgenden zumeist - aus Gründen der Vereinfachung - 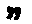 Band" genannt, als ein Endlosband, werden die oben beschriebenen Nachteile vermieden, da die Tragelemente nun derartig ausgebildet bzw. hintereinander angeordnet sind, daß Lücken zwischen den einzelnen Tragelementen nun nicht mehr auftreten, die einzelnen Tragelemente also hintereinander angeordnet sind und sich entsprechend gegenseitig auch während der Bewegung der Tragelemente berühren, so daß ein lückenloser Übergang von einem ersten zu einem zweiten Tragelement gewährleistet ist. Da zwischen den einzelnen Tragelementen keine Lücken mehr entstehen, kann auf bestimmte Sicherheitsanforderungen verzichtet werden, wobei auch der Montageaufwand für die Monteure verringert ist, da die Monteure immer kurze, direkte Wege zurücklegen können und keine Lücken umgehen müssen.

Es gibt nun verschiedene Möglichkeiten, das erfindungsgemäße Montage- und/oder Transportband auszugestalten und weiterzubilden. Hierfür darf auf die dem Patentanspruch 1 nachgeordneten Patentansprüche verwiesen werden. Im einzelnen werden nun mehrere bevorzugte Ausführungsbeispiele für das erfindungsgemäße Montage- und/oder Transportband anhand der folgenden Zeichnung und Beschreibung näher beschrieben. Die Zeichnung zeigt
- Fig. 1: das erfindungsgemäße Montage- und/oder Transportband in einer schematischen Darstellung von oben,
- Fig. 2: den in Fig. 1 durch den Kreis angedeuteten Ausschnitt des erfindungsgemäßen Montage- und/oder Transportbandes in einer vergrößerten Darstellung,
- Fig. 3: das erfindungsgemäße Montage- und/oder Transportband in einer schematischen Darstellung von der Seite,
- Fig. 4: das in Fig. 3 dargestellte erfindungsgemäße Montage- und/oder Transportband in einer schematischen Darstellung im Schnitt,
- Fig. 5: eine zweite Ausführungsform des erfindungsgemäßen Montage- und/oder Transportbandes schematisch im Schnitt,
- Fig. 6: ein Tragelement des in Fig. 5 dargestellten Transportbandes in einer schematischen Darstellung von oben,
- Fig. 7: ein Reibrollenantrieb zur Bewegung des erfindungsgemäßen Montage- und/oder Transportbandes in einer schematischen Darstellung von der Seite,
- Fig. 8a, 8b: die Abdeckungselemente für die einen Kurvenbereich durchlaufenden Tragelemente, nämlich für den äußeren Kurvenbereich (Fig. 8a) und den inneren Kurvenbereich Fig. 8b (Fig. 8b), und
- Fig. 9: eine Hubeinheit für ein Tragelement.

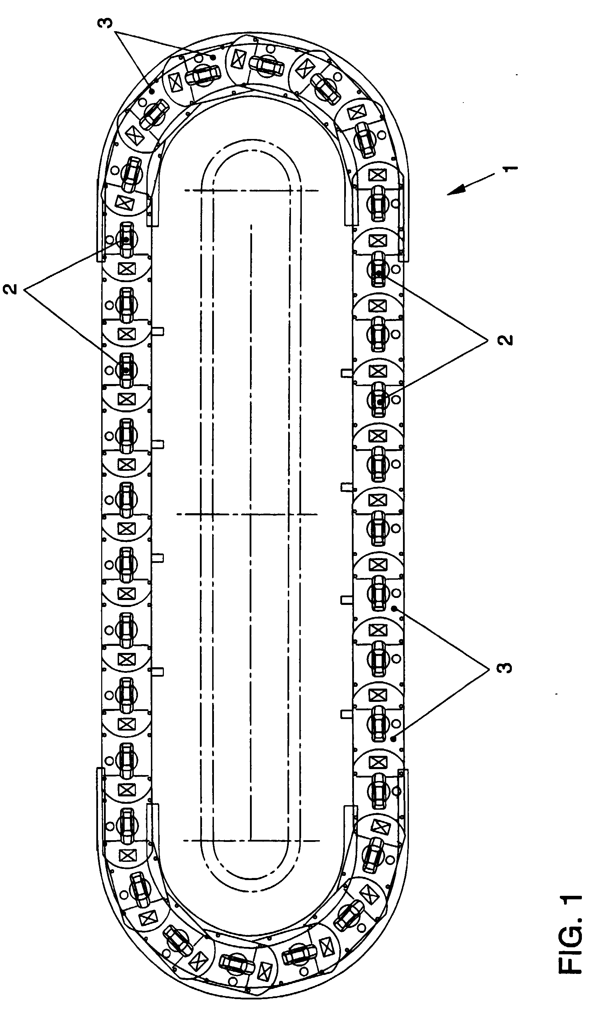

Die Fig. 1 bis 9 zeigen das erfindungsgemäße Montage- und/oder Transportband 1 bzw. Bestandteile des Bandes 1 für die Montage oder den Transport eines Kraftfahrzeugs 2. Es sind mehrere einzelne Tragelemente 3 vorgesehen, wobei jedes Tragelement 3 bewegbar gelagert und zur Aufnahme eines Kraftfahrzeugs 2 ausgebildet ist.

Die eingangs erwähnten Nachteile werden nun dadurch vermieden, daß die Tragelemente 3 derartig ausgebildet und hintereinander angeordnet sind, daß das Band 1 als ein Endlosband ausgeführt ist. Fig. 1 zeigt deutlich die Ausbildung des Bandes 1 als ein Endlosband. Hier sind insgesamt 33 Tragelemente 3 hintereinander angeordnet und bilden hier das Endlosband, das im wesentlichen die Form eines Ovals bzw. die Form eines 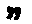 Kettensägenblattes" aufweist.

Jedes einzelne Tragelement 3 ist vzw. 9 m lang und 7 m breit. Das in Fig. 1 dargestellte Band 1 weist im wesentlichen eine Länge von vzw. 90 m bzw. eine Breite von vzw. ca. 35 m auf. Das Band 1 ist kontinuierlich in Bewegung und gewährleistet einen Umlauf der Tragelemente 3 ohne Bildung von Lücken, ähnlich wie beispielsweise Kofferbänder auf Flughäfen. Von besonderem Vorteil ist, daß die Tragelemente 3 so angeordnet bzw. ausgebildet sind, daß bei einem Richtungswechsel der Tragelemente 3, insbesondere wenn diese den Kurvenbereich durchlaufen, keine Lückenbildung zwischen den Tragelementen 3 auftritt.

Die Tragelemente 3 sind nämlich bewegbar gelagert, wobei sie im wesentlichen 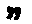 formschlüssig" ineinandergreifen, was im folgenden noch näher erläutert werden soll.

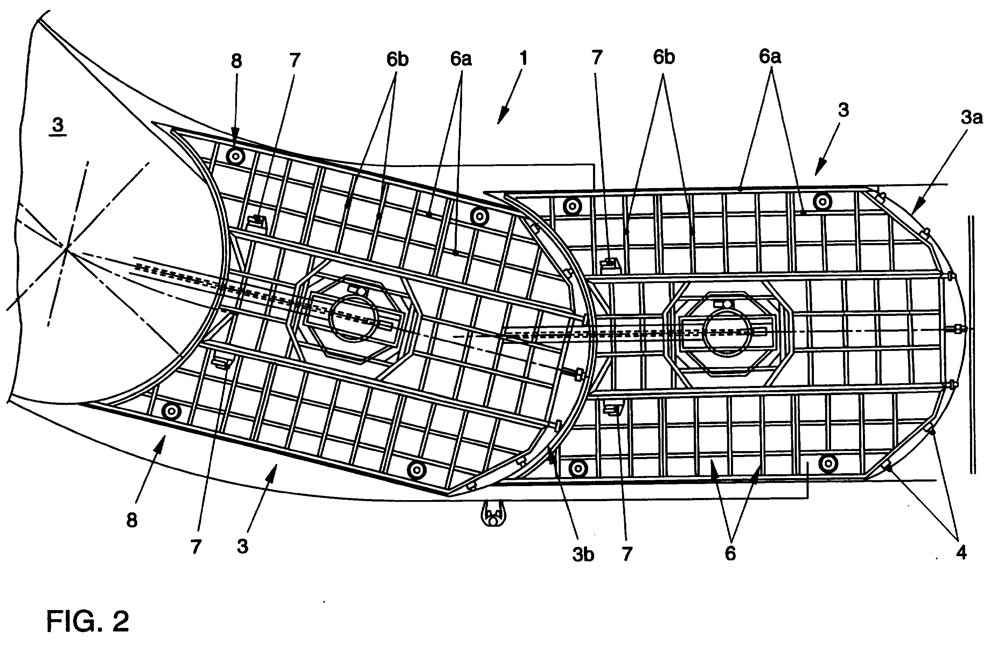

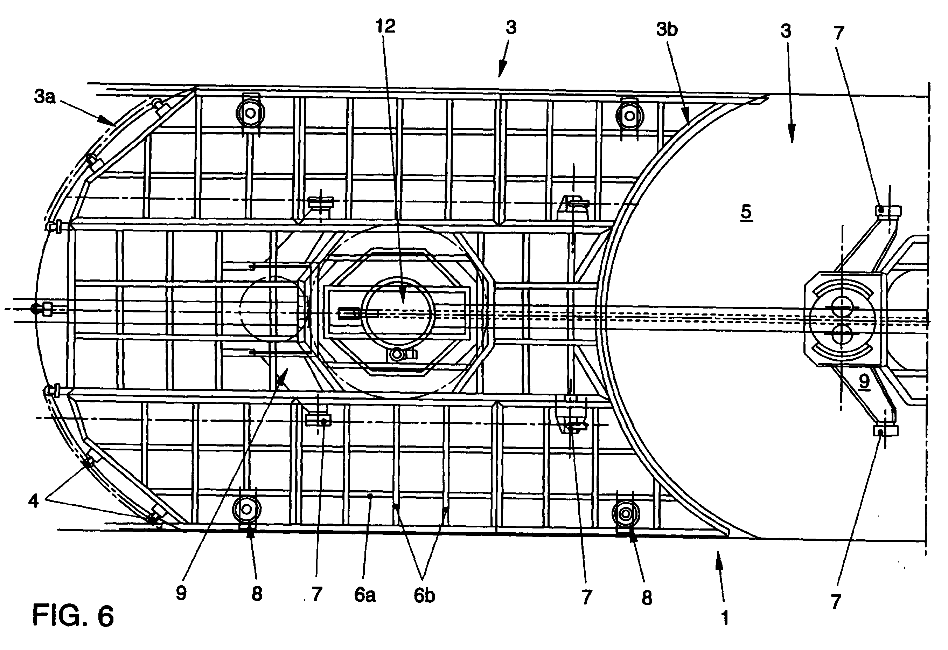

Die vergrößerte Darstellung eines Teilbereichs der Fig. 1, nämlich die Fig. 2, zeigt, daß die Tragelemente 3 im wesentlichen schuppenförmig ausgebildet sind und eine Auswölbung 3a bzw. eine Ausnehmung 3b aufweisen. In die Ausnehmung 3b eines ersten Tragelements 3 greift die Auswölbung 3a eines nachfolgenden zweiten Tragelements 3 ein. Die Darstellung in Fig. 6 verdeutlicht, daß außen an der Auswölbung 3a Reibrollen 4 zur Realisierung einer Führung der Auswölbung 3a des zweiten Tragelements 3 in der Ausnehmung des davor angeordneten, hier nicht dargestellten Tragelementes 3 vorgesehen sind.

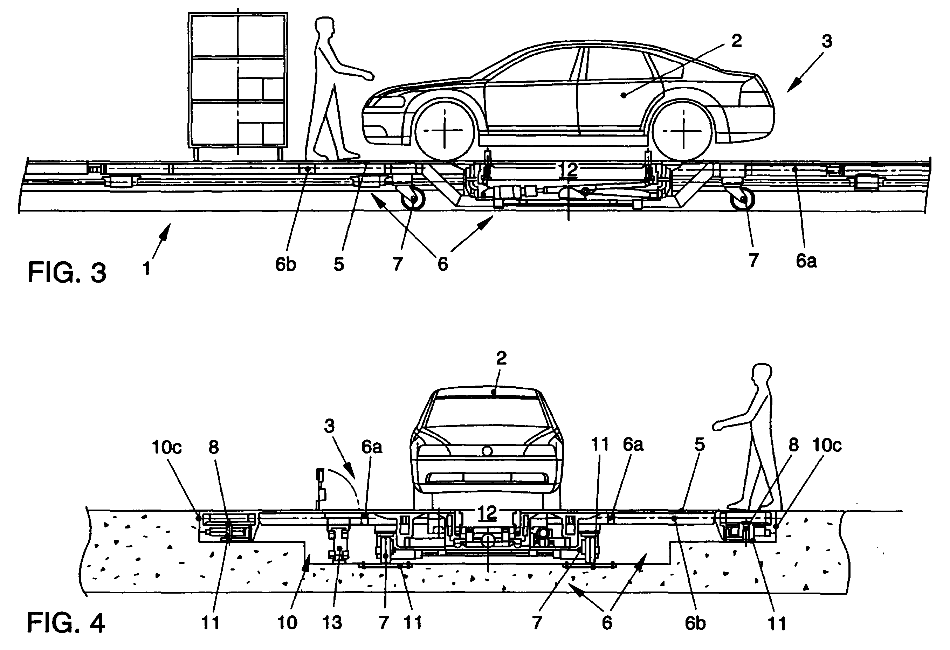

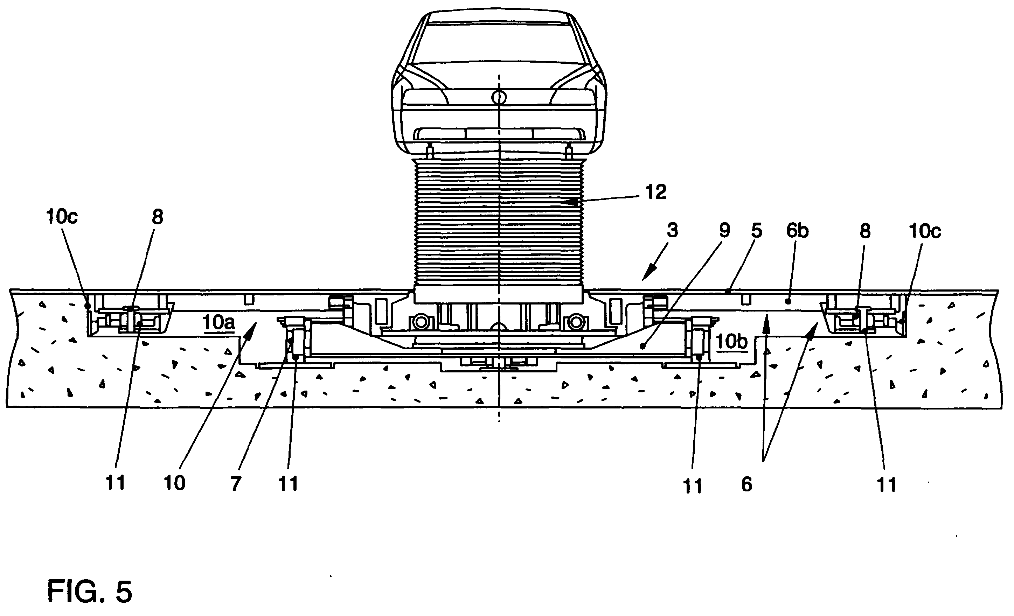

Wie insbesondere die Fig. 3, 4 und 5 zeigen, weist jedes Tragelement 3 eine obere Plattform 5 und einen unteren Tragrahmen 6 auf. Die Darstellung in Fig. 2 und Fig. 6 zeigt, daß der Tragrahmen 6 Längsstreben 6a und Querstreben 6b aufweist, auf denen die Plattform 5 aufliegt. Auf der Unterseite der Plattform 5 und/oder am Tragrahmen 6 sind Stützrollen 7 zur Abstützung und Führungsrollen 8 zur Führung des Tragelements 3 vorgesehen. Die Fig. 3 und 4 zeigen hier eine erste Alternative für die Anordnung der Stützrollen 7. Die hier vier vorgesehenen Stützrollen 7 sind hier jeweils einzeln schwenkbar bzw. verdrehbar gelagert. Eine zweite Alternative ist hingegen in den Fig. 5 und 6 dargestellt, wo die zwei vorderen Stützrollen 7 derartig angeordnet sind, daß eine vordere Schwenkachse 9 gebildet ist und die hinteren Stützrollen 7 jeweils schwenkbar bzw. verdrehbar gelagert sind.

Wie aus den Fig. 4 und 5 ersichtlich ist, sind die Tragelemente 3 in einer Bodenausnehmung 10 derart gelagert, daß deren Plattform 5 mit dem Bodenbereich im wesentlichen bündig abschließt. Weiterhin ist erkennbar, daß für die Stützrollen 7 und/oder für die Führungsrollen 8 innerhalb der Bodenausnehmung 10 entsprechende Gleitschienen 11 vorgesehen sind.

Wie die Fig. 2, 3, 4, 5 und 6 in schematischer Darstellung zeigen, weist jedes Tragelement 3 eine innerhalb des Tragrahmens 6 gelagerte Hubeinheit 12 mit entsprechendem motorischen Antrieb für das zu transportierende Kraftfahrzeug 2 auf. Die in den Figuren dargestellte Hubeinheit 12 ist als Spindelhubtisch ausgeführt, wobei für die Stromzufuhr des motorischen Antriebs der Hubeinheit oder auch für andere elektrisch betriebene Einheiten innerhalb der Bodenausnehmung 10 eine Stromschiene 13 angeordnet ist. Die Stromschiene 13 ist mit einem entsprechenden am Tragelement 3 angeordneten Stromabnehmerelement immer in Kontakt, so daß die elektrische Zufuhr zum motorischen Antrieb der Hubeinheit 12 bzw. zu anderen elektrisch betriebenen Einheiten immer gewährleistet ist.

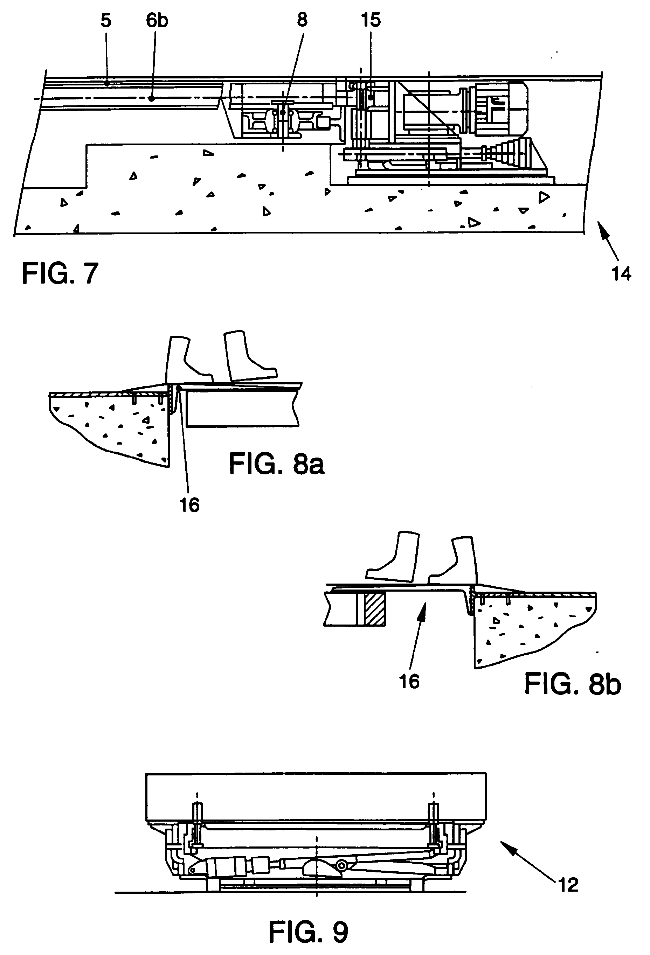

Schließlich zeigt die Fig. 7 einen Reibrollenantrieb 14, nämlich hier den nicht näher bezeichneten motorischen Antrieb bzw. das Getriebe und die Reibrolle 15, die mit der Seitenwandung der Plattform 5 des Tragelements 3 bzw. mit einer entsprechenden Längsstrebe 6a in Kontakt steht, so daß das Tragelement 3 über den Reibrollenantrieb 14 entsprechend bewegbar ist.

Die Reibrollenantriebe 14 sind auch schematisch in Fig. 1 erkennbar. Das in Fig. 1 dargestellte Band 1 dreht gegen den Uhrzeigersinn, wobei die Tragelemente 3 hier mit Hilfe der Reibrollenantriebe 14 entsprechend angetrieben werden. Wie die vergrößerte Darstellung in Fig. 2 zeigt, greift die Auswölbung 3a eines Tragelements 3 in die Ausnehmung 3b eines davor angeordneten Tragelements 3 ein, wobei im Kurvenbereich zur Erleichterung der Bewegung bzw. des Ineinandergreifens von Auswölbung 3a und Ausnehmung 3b entsprechende Reibrollen 4 angeordnet sind, wie Fig. 6 erkennen läßt. Der Tragrahmen 6 der Tragelemente 3 ist so ausgebildet, daß im wesentlichen mittig innerhalb des Tragrahmens 6 eine Hubeinheit 12 angeordnet ist, die zusätzlich auch als Dreheinheit ausgeführt sein kann.

Fig. 3 zeigt hier die Hubeinheit 12 im heruntergefahrenen Zustand, wobei das Kraftfahrzeug 2 also auf der Plattform 5 des Tragelements 3 aufliegt bzw. steht. Der Abstand der in Fig. 3 gezeigten Stützrollen 7 zueinander beträgt vzw. 4 m ( 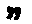 Achsabstand").

Bei der Fig. 5 ist die Hubeinheit 12 in ihrem ausgefahrenen Zustand gezeigt, das Kraftfahrzeug 2 also nach oben verfahren worden. Weiterhin ist bei der hier dargestellten Ausführungsform ersichtlich, daß zusätzlich zu den Stützrollen 7 in der Mitte des Tragelements 3 noch eine weitere zusätzliche Stützrolle angeordnet ist, die ebenfalls in einer zusätzlich angeordneten Leitschiene läuft. Deutlich wird hier auch die Ausbildung der Bodenausnehmung 10, die hier im wesentlichen einen oberen Bereich 10a und einen unteren Bereich 10b aufweist. Weiterhin zeigt die Fig. 5, daß die Führungsrollen 8 auch über entsprechende an der Seitenwandung 10c anliegende Elemente entsprechend geführt werden, die Seitenwandung 10c der Bodenausnehmung 10 folglich zur Führung des Tragelements 3 entsprechend beiträgt.

Der in Fig. 7 dargestellte Reibrollenantrieb 14 ist je nach der Größe des Bandes 1 entsprechend dimensioniert. Folglich können mehrere Reibrollenantriebe 14 vorgesehen werden, um das Band 1 bzw. die Tragelemente 3 entsprechend anzutreiben.

Schließlich zeigen die Fig. 8a bzw. 8b entsprechende Abdeckungselemente 16, die in den Kurvenbereichen des Bandes 1 entsprechende Bedeutung gewinnen. Fig. 8a zeigt das Abdeckungselement 16 für den äußeren Kurvenbereich, wohingegen Fig. 8b das Abdeckungselement 16 für den inneren Kurvenbereich des Bandes 1 zeigt. Ersichtlich ist, daß die Abdeckungselemente 16 so ausgebildet sind, daß die im Kurvenbereich seitlich entstehenden geringen Toleranzbereiche entsprechend überbrückt werden.

Fig. 9 zeigt die Hubeinheit 12, die hier als Spindelhubtisch ausgeführt ist und die im wesentlichen in der Mitte jedes Tragelements 3 angeordnet ist. Mit Hilfe der Hubeinheit 12 kann das entsprechende Kraftfahrzeug 2 in die für die jeweilige Bearbeitungsstation erforderliche Bearbeitungshöhe gefahren werden oder, wenn die Hubeinheit 12 zugleich auch als Dreheinheit ausgebildet ist, entsprechend verdreht werden.

Das als Endlosband ausgeführte erfindungsgemäße Band 1 weist vzw. eine Anzahl von Tragelementen 3 auf, die ungerade ist, da hierdurch sich wesentlich kinematische Vorteile ergeben. Aufgrund einer ungeraden Anzahl von Tragelementen 3 kann nämlich die Ausbildung von Zwischenräumen (Lücken) zwischen den Tragelementen 3, insbesondere im Kurvenbereich, vermieden werden, da aufgrund der ungeraden Anzahl der Tragelemente 3 innerhalb des oval ausgeführten Bandes 1 die entsprechenden Bewegungsabläufe immer diametral sich gegenüberliegend ablaufen und sich somit - insgesamt gesehen - 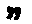 kompensieren" lassen.

### BEZUGSZEICHENLISTE

- 1: Band
- 2: Kraftfahrzeug
- 3: Tragelement
- 3a: Auswölbung
- 3b: Ausnehmung
- 4: Reibrollen
- 5: obere Plattform
- 6: unterer Tragrahmen
- 6a: Längskolben
- 6b: Querkolben
- 7: Stützrollen
- 8: Führungsrollen
- 9: Schwenkachse
- 10: Bodenausnehmung
- 10a: oberer Bereich
- 10b: unterer Bereich
- 10c: Seitenwand
- 11: Gleitschiene
- 12: Hubeinheit
- 13: Stromschiene
- 14: Reibrollenantrieb
- 15: Reibrolle
- 16: Abdeckungselemente

## Patentansprüche

1. Montage- und/oder Transportband (1) für die Montage oder den Transport eines Kraftfahrzeuges (2), wobei mehrere einzelne Tragelemente (3) vorgesehen sind, jedes Tragelement (3) bewegbar gelagert und zur Aufnahme eines Kraftfahrzeuges (2) ausgebildet ist, **dadurch gekennzeichnet,** daß die Tragelemente (3) derartig ausgebildet und hintereinander angeordnet sind, daß das Band (1) als ein Endlosband ausgeführt ist.

2. Band nach dem vorhergehenden Anspruch, **dadurch gekennzeichnet,** daß das Endlosband im wesentlichen die Form eines Ovals aufweist.

3. Band nach einem der vorhergehenden Ansprüche, **dadurch gekennzeichnet,** daß die Tragelemente (3) im wesentlichen formschlüssig bewegbar ineinander greifen.

4. Band nach einem der vorhergehenden Ansprüche, **dadurch gekennzeichnet,** daß die Tragelemente (3) im wesentlichen schuppenförmig ausgebildet sind und eine Auswölbung (3a) sowie eine Ausnehmung (3b) aufweisen.

5. Band nach einem der vorhergehenden Ansprüche, **dadurch gekennzeichnet,** daß in die Ausnehmung (3b) eines ersten Tragelementes (3) die Auswölbung (3a) eines nachfolgenden zweiten Tragelementes (3) eingreift und außen an der Auswölbung (3a) Reibrollen (4) zur Realisierung einer Führung der Auswölbung (3a) des zweiten Tragelementes (3) in der Ausnehmung (3b) des ersten Tragelementes (3) vorgesehen sind.

6. Band nach einem der vorhergehenden Ansprüche, **dadurch gekennzeichnet,** daß jedes Tragelement (3) eine obere Plattform (5) und einen unteren Tragrahmen (6) aufweist.

7. Band nach einem der vorhergehenden Ansprüche, **dadurch gekennzeichnet,** daß der Tragrahmen (6) Längs- und Querstreben (6a, 6b) aufweist.

8. Band nach einem der vorhergehenden Ansprüche, **dadurch gekennzeichnet,** daß auf der Unterseite der Plattform (5) und/oder am Tragrahmen (6) Stützrollen (7) zur Abstützung und Führungsrollen (8) zur Führung des Tragelementes (3) vorgesehen sind.

9. Band nach einem der vorhergehenden Ansprüche, **dadurch gekennzeichnet,** daß vier, insbesondere schwenkbar gelagerte Stützrollen (7) vorgesehen sind.

10. Band nach einem der vorhergehenden Ansprüche, **dadurch gekennzeichnet,** daß die zwei vorderen Stützrollen (7) derartig angeordnet sind, daß eine vordere Schwenkachse (9) gebildet ist und die hinteren Stützrollen (7) schwenkbar gelagert sind.

11. Band nach einem der vorhergehenden Ansprüche, **dadurch gekennzeichnet,** daß die Tragelemente (3) in einer Bodenausnehmung (10) derart gelagert sind, daß deren Plattform (5) mit dem Bodenbereich im wesentlichen bündig abschließt.

12. Band nach einem der vorhergehenden Ansprüche, **dadurch gekennzeichnet,** daß für die Stützrollen (7) und/oder für die Führungsrollen (8) innerhalb der Bodenausnehmung (10) entsprechende Gleitschienen (11) vorgesehen sind.

13. Band nach einem der vorhergehenden Ansprüche, **dadurch gekennzeichnet,** daß jedes Tragelement (3) eine innerhalb des Tragrahmens (6) gelagerte Hubeinheit (12) mit entsprechendem motorischen Antrieb für das zu transportierende Kraftfahrzeug (2) aufweist.

14. Band nach einem der vorhergehenden Ansprüche, **dadurch gekennzeichnet,** daß die Hubeinheit (12) als Spindelhubtisch ausgeführt ist und für die Stromzufuhr des motorischen Antriebes der Hubeinheit (12) und/oder für weitere elektrisch zu betreibende Einheften eine Stromschiene (13) innerhalb der Bodenausnehmung (10) angeordnet ist.

15. Band nach einem der vorhergehenden Ansprüche, **dadurch gekennzeichnet,** daß die Anzahl der schuppenförmigen Tragelemente (3) ungerade ist.

16. Band nach einem der vorhergehenden Ansprüche, **dadurch gekennzeichnet,** daß das Band (1) durch einen Reibrollenantrieb (14) antreibbar ist.
